# EUROPÄISCHE PATENTANMELDUNG

(11) **EP 2 312 285 A1**
(43) Veröffentlichungstag der Anmeldung: **20.04.2011**
(21) Anmeldenummer: 10010901.6
(22) Anmeldetag: 27.09.2010
(51) Int. Cl.: G01G 19/18, G01G 19/414, G01G 21/28, G01G 23/00

(54) **Waage**

(30) Priorität: 19.10.2009 DE 102009049822
(71) Anmelder: Mettler-Toledo (Albstadt) GmbH, 72458 Albstadt (DE)
(72) Erfinder: Kempf, Edgar E., 72514 Inzigkofen (DE); Weber, Klaus, 72336 Balingen (DE); Grieson, Gerd, 72461 Albstadt (DE)
(74) Vertreter: Leinweber & Zimmermann

(57) **Zusammenfassung**

Waage bestehend aus einem, in der Richtung der Gewichtskraft eines mit der Waage zu wiegenden Gutes gesehen, ersten Abschnitt, mit dem die Waage an einem Aufstellungsort festlegbar ist, und einem sich an den ersten Abschnitt anschließenden zweiten Abschnitt, wobei diese Abschnitte einen elektromechanischen Kraftwandler zur Erzeugung eines der Gewichtskraft entsprechenden elektrischen Signals und einen mit dem Kraftwandler kräftemäßig gekoppelten Lastaufnehmer zur Einleitung der Gewichtskraft in den Kraftwandler aufweisen, wobei orthogonal zur Richtung der Gewichtskraft die räumliche Ausdehnung des ersten Abschnittes gegenüber der des zweiten Abschnittes herabgesetzt ist.

## Beschreibung

Die Erfindung betrifft eine Waage bestehend aus einem, in der Richtung der Gewichtskraft eines mit der Waage zu wiegenden Gutes gesehen, ersten Abschnitt, mit dem die Waage an einem Aufstellungsort festlegbar ist, und einem sich an den ersten Abschnitt anschließenden zweiten Abschnitt, wobei diese Abschnitte einen elektromechanischen Kraftwandler zur Erzeugung eines der Gewichtskraft entsprechenden elektrischen Signals und einen mit dem Kraftwandler kräftemäßig gekoppelten Lastaufnehmer zur Einleitung der Gewichtskraft in den Kraftwandler aufweisen.

Derartige Waagen sind bekannt. Unter anderem werden sie in Form von Ladenwaagen in Selbstbedienungsbereichen von Ladengeschäften aufgestellt, so daß Ladenkunden Produkte wie etwa Obst und Gemüse eigenständig abwiegen und mit einem den Produktpreis anzeigenden Etikett versehen können.

Dazu sind diese Selbstbedienungswaagen auf Tragetischen in der Nähe der Warentische oder oberhalb der Warentische selbst aufgestellt. Die Stellfläche der Ladenwaage ist dabei aus Stabilitätsgründen großflächig ausgelegt und überragt im Regelfall die Ablagefläche, auf die der Kunde beim Wägevorgang die abzuwiegende Ware ablegt.

Mögliche Aufstellungsorte für die im Ladengeschäft aufgestellten Waagen sind durch die räumliche Struktur des Ladengeschäfts vorgegeben. Es hat sich aber herausgestellt, daß auch bei optimaler Ausnutzung der Ladenstruktur noch Probleme bei der Bedienerfreundlichkeit der Waagen auftreten. Beispielsweise kann es zu langen Wartezeiten an der Waage kommen, die Kunden müssen sich eine Identifikationsnummer für ihr gewähltes Produkt merken, die für den Wägevorgang einzugeben ist, oder andernfalls das gewählte Produkt auf einer eine große Zahl von Piktogrammen enthaltenden Bedienertafel wieder erkennen, was ebenfalls mühselig ist.

Der Erfindung liegt daher die Aufgabe zugrunde, eine Waage der eingangs genannten Art bereitzustellen, mit der bei vorgegebener Ladenstruktur eine Verbesserung der Kundenfreundlichkeit erreichbar ist.

Die Aufgabe wird durch eine Weiterbildung der Waage mit den eingangs genannten Merkmalen gelöst, die im wesentlichen dadurch gekennzeichnet ist, daß orthogonal zur Richtung der Gewichtskraft die räumliche Ausdehnung des ersten Abschnittes gegenüber der des zweiten Abschnittes herabgesetzt ist.

Aufgrund der verringerten räumlichen Ausdehnung des ersten Abschnitts, mit dem die Waage an dem Aufstellungsort festgelegt wird, wird der zur Festlegung der Waage benötigte Raum verringert, so daß eine vorgegebene Ladenstruktur zur Aufstellung der Waage(n) besser ausgenutzt werden kann. Es wird wertvolle Stellfläche eingespart, die anderweitig nutzbar ist, beispielsweise durch die Aufstellung von weiteren Waagen. Somit kann durch die Bereitstellung mehrerer Waagen bei gleichem Platzbedarf die Kundenfreundlichkeit für die die Waage als Selbstbedienungswaage nutzenden Kunden verbessert werden.

In einer besonders bevorzugten Ausführungsform der Erfindung ist der Lastaufnehmer zur hängenden Aufnahme des zu wiegenden Gutes ausgebildet. Somit tritt an die Stelle des Prinzips der Auflage der Waren auf eine flächige Auflage das des Hängens des zu wiegenden Gutes an den Lastaufnehmer. Da keine größere Auflagefläche mehr bereitgesteilt werden muß, kann weiter Raum eingespart werden.

Zweckmäßig sind der Lastaufnehmer und der Kraftwandler in dem zweiten Abschnitt angeordnet. Damit wird sichergestellt, daß gerade im Bereich der Festlegung der Waage am Aufstellungsort eine äußerst geringe räumliche Ausdehnung orthogonal zur Richtung der Gewichtskraft möglich ist. Insbesondere kann verhindert werden, daß in benachbarten Warenständern angebotene Produkte von der Waage verdeckt werden.

Nach einer besonders bevorzugten Ausführungsform besteht der erste Abschnitt aus einer Teillänge einer schlanken Tragsäule, an deren freiem Ende die Waage an ihrem Aufstellungsort festlegbar ist, und der zweite Abschnitt umfaßt die verbleibende Teillänge der Tragsäule mit dem daran festgelegten Kraftwandler sowie dem damit gekoppelten Lastaufnehmer. Auf diese Weise kann erreicht werden, daß im Bereich der für die Läden wertvollen Stellfläche lediglich Platz für die schlanke Tragsäule vorgesehen werden muß, während die erforderliche größere räumliche Ausdehnung orthogonal zur Richtung der Gewichtskraft in einen höher gelegenen Bereich verlagert wird, dessen Belegung die wertvollen Stellflächen weniger oder nicht mehr beeinträchtigt.

In einer bevorzugten Ausführungsform weist der zweite Abschnitt eine Auswerteeinheit für die der Gewichtskraft entsprechenden Signale auf. So kann in einer an sich bekannten Weise dafür Sorge getragen werden, daß die Signale weiter verarbeitet werden und daraus weitere produktgewichtsabhängige Informationen, wie z. B. der Kaufpreis, abgeleitet werden können.

Zweckmäßig ist vorgesehen, daß der zweite Abschnitt eine Sichtanzeigeeinheit für aus den der Gewichtskraft entsprechenden Signalen gebildete Gewichtswerte aufweist. Somit kann der Kunde gleich am Ort der Wägung über das Gewicht des Wägegutes informiert werden.

Besonders bevorzugt ist auch vorgesehen, daß der zweite Abschnitt eine Eingabeeinheit für manuelle Benutzereingaben aufweist. Damit kann der Benutzer der Waage eine Produktidentifikationsinformation bereitstellen, aufgrund der weitere Produktinformationen wie z. B. Preis pro Gewichtseinheit zugeordnet werden können.

Zweckmäßig ist die Sichtanzeigeeinheit ein Berührungsbildschirm. Somit können zum einen zwei funktionell unterschiedliche Einheiten in einer körperlichen Einheit realisiert werden, zum anderen ist z. B. durch den Einsatz insbesondere bereits im Bereich von Mobilfunkgeräten (iphone) bekannte Bedienungstechnik eine für den Benutzer einfache Eingabe der Produktidentifikationsinformation gegeben.

Zweckmäßig ist vorgesehen, daß durch die Auswerteeinheit in Abhängigkeit von dem der Gewichtskraft entsprechenden Signal und einer manuell eingegebenen Benutzereingabe gemäß einer vorgegebenen Zuordnung eine Produktinformation, insbesondere ein Kaufpreis für das gewogene Gut bestimmbar und an der Sichtanzeigeeinheit anzeigbar ist. Somit können weiterhin die dem Benutzer vertrauten Informationen bereitgestellt werden. In diesem Zusammenhang kann auch ein in dem zweiten Abschnitt angeordneter Etikettendrucker vorgesehen sein, der die für den weiteren Verkaufsvorgang benötigten Informationen auf ein Klebeetikett aufdruckt, mit dem der Kunde sein abgewogenes Gut zur späteren Bezahlung des Guts vorbereiten kann.

In einer besonders bevorzugten Ausführungsform weist der Lastaufnehmer ein stabförmiges Element auf oder ist daraus gebildet. So kann die Gewichtskraft äußerst einfach in den Kraftwandler eingeleitet werden, indem das stabförmige Element an einem Ende kraftschlüssig an den Kraftwandler gekoppelt ist, während an dessen entgegengesetztem Ende ein Aufhängebereich für das zu wiegende Gut gebildet ist.

Zweckmäßig verläuft die Richtung der Längserstreckung des Lastaufnehmers in unbelastetem Zustand im wesentlichen orthogonal zu der Richtung der Gesichtskraft. Dadurch wird eine geringe Belastung der Kopplung zwischen Lastaufnehmer und Kraftwandler erreicht.

In einer besonders bevorzugten Ausführungsform weist der zweite Abschnitt einen Überlastschutz auf, durch den eine von der Lastaufnahme verursachte Bewegung des Lastaufnehmers bei Überschreitung einer vorgegebenen Grenzlast sperrbar ist. Somit wird sichergestellt, daß der Kraftwandler keinen übermäßigen Lasten ausgesetzt werden kann, die zu einer Beschädigung des Kraftwandlers führen können. Insbesondere muß der Kraftwandler dann nur bis zu dieser vorgegebenen maximalen Belastbarkeit ausgelegt werden, wodurch Kosten gespart werden können.

In einer besonders bevorzugten Ausführungsform schützt der Überlastschutz auch vor der Aufnahme einer Störkraft, die in der Ebene orthogonal zur Längserstreckung des Lastaufnehmers wirkt, indem er eine übermäßige Bewegung des Lastaufnehmers aus dem unbelasteten Zustand in dieser Ebene sperrt. Auf diese Weise kann zuverlässig verhindert werden, daß aufgrund einer unbeabsichtigten Kraftausübung auf den Lastaufnehmer, beispielsweise eines Stoßes in horizontaler Richtung, eine Beschädigung der Waage, insbesondere des Kraftwandlers oder dessen Kopplung an den Lastaufnehmer zu besorgen ist.

In dem Zusammenhang ist zweckmäßig vorgesehen, daß der Überlastschutz einen ortsfest angebrachten Hohlkörper aufweist oder daraus gebildet ist, insbesondere einen Hohlzylinder, der von einem Teil des Lastaufnehmers durchdrungen ist. Sobald eine Bewegung des Lastaufnehmers in irgendeine Richtung orthogonal zur Längserstreckung des Lastaufnehmers größer wird als ein in unbelastetem Zustand in diese Richtung bestehender Abstand zwischen dem Lastaufnehmer und dem diesen umschließenden Hohlkörper, wird diese durch den ortsfesten Hohlkörper verhindert und die kräftemäßig nachgeschaltete Anordnung dadurch geschützt.

Zweckmäßig ist bei Eingreifen des Überlastschutzes ein entsprechendes Warnsignal erzeugbar und insbesondere auf der Sichtanzeige angebbar. Dies könnte zum einen durch einen Sensor erreicht werden, allerdings ist es auch ausreichend, wenn die Auswerteeinheit der Waage den Waagenbenutzer automatisch bei Erhalt eines der Maximallast entsprechenden Signals auf das für die Waage zu hohe Gewicht des Wägeguts hinweist.

In einer zweckmäßigen Ausführungsform ist/sind eine auf der Sichtanzeige anzeigbaren Anzeigeinformation, eine Produktinformation wie etwa Preis pro Gewichtseinheit und/oder die vorgegebene Zuordnung über die Eingabeeinheit änderbar. Da aufgrund des verringerten Platzbedarfs mehrere Waagen aufgestellt werden können, kann vorgesehen werden, daß die Auswerteeinheit eine Waage nicht mehr über Informationen zu der gesamten Produktpalette verfügt, sondern nur noch Informationen/Zuordnungen für diejenige Produkte, die lokal in der Nähe des Aufstellungsorts der Waage angeboten werden. Insofern dadurch eine häufigere Aktualisierung der Informationen/Zuordnungen seitens des Servicepersonals durchzuführen ist, kann das Servicepersonal diese besonders einfach ändern bzw. neu konfigurieren. In diesem Zusammenhang ist auch vorgesehen, daß eine Schnittstelle zum Anschluß eines transportablen Datenträgers vorgesehen ist, über den noch nicht in der Auswerteeinheit enthaltene Daten neu in diese eingespielt werden können. Letzteres ist selbstverständlich auch über einen drahtgebundenen und/oder drahtlosen Anschluß der Waage an eine zentrale Waagensteuerung realisierbar.

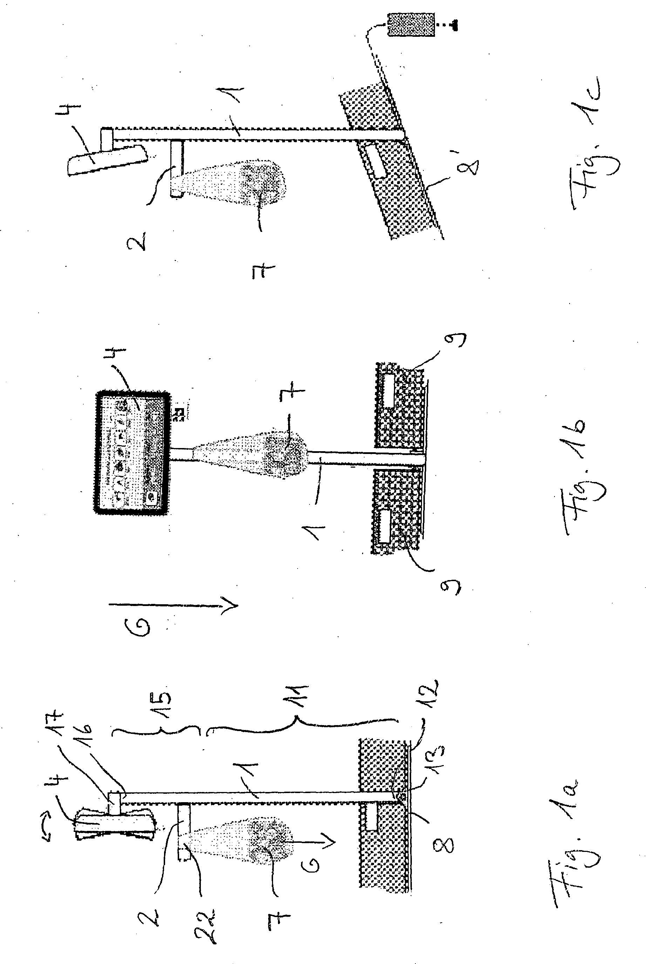

Weitere Einzelheiten und Vorteile der Erfindung ergeben sich aus der Beschreibung der beiliegenden Zeichnung, in der
- Fig. 1a: schematisch eine Ausführungsform einer Waage in einer Seitenansicht zeigt,
- Fig. 1b: die in Fig. 1a gezeigte Waage in einer Frontansicht zeigt,
- Fig. 1 c: die Waage der Figuren 1 a und 1b in einer Seitenansicht zeigt, wobei der Auf- stellungsort der Waage durch eine geneigte Fläche gebildet ist,
- Fig. 2: schematisch die Anordnung von Lastarm und Kraftwandler einer Waage einer zweiten Ausführungsform zeigt,
- Fig. 3: eine Anordnung aus Lastaufnehmer, Überlastsicherung und Kraftwandler einer Waage in einer dritten Ausführungsform zeigt, und
- Fig. 4: eine Draufsicht auf Lastaufnehmer und Überlastschutz aus der in Fig. 3 mit IV gekennzeichneten Richtung zeigt.

Die in Fig. 1 a schematisch dargestellte Waage ist eine Hängewaage, die einen im oberen Abschnitt 15 einer vertikal aufgestellten Tragsäule 1 angeordneten Lastarm 2 aufweist, an dessen freiem Endbereich 22 eine Last gehängt werden kann, üblicherweise ein Behälter, z. B. eine Tüte, in dem das Wägegut 7 aufgenommen ist.

Das in Schwererichtung G wirkende Gewicht des Wägeguts 7 wird durch den Lastarm 2 in einen an den Lastarm 2 kraftschlüssig gekoppelten, aber in Fig. 1 a nicht dargestellten elektromechanischen Kraftwandler eingeleitet, der die eingeleitete Kraft in ein der Gewichtskraft des Wägeprodukts 7 entsprechendes Gewichtssignal umwandelt, das an eine ebenfalls in Fig. 1 a nicht gezeigte Auswerteeinheit weitergeleitet wird.

Des weiteren weist die Waage eine Sichtanzeige 4 auf, die an einer am bodenfernen Ende 16 der Tragsäule 1 angeordneten Querstrebe 17 drehbar befestigt ist, so daß der Winkel zwischen Schwererichtung und der Normalen auf die Sichtanzeige 4 einstellbar ist, wie in Fig. 1 a mit Phantombildern der ausgelenkten Sichtanzeige angedeutet ist.

Aus Fig. 1 a sowie der entsprechenden Frontansicht Fig. 1b ist erkennbar, daß die Tragsäule 1 am bodennahen Ende 12 ihres unteren Abschnitts 11 mit einer am Aufstellungsort 8 vorgesehenen Verankerung 13 fest verschraubt ist.

Somit ist im Bereich des unteren Abschnitts 11 der Tragsäule 1 die maximale räumliche Ausdehnung der Waage orthogonal zur Schwererichtung G allein durch die Querschnittsfläche der Tragsäule 1 bestimmt, so daß die Umgebungsfläche des Aufstellungsortes 8, an dem die Waage festgelegt ist, nur unwesentlich in Beschlag genommen wird. Wie insbesondere aus Fig. 1b erkennbar ist, ist Raum für links und rechts neben der Tragsäule 1 angeordnete Behälter 9 zur Aufnahme und Bereitstellung von Waren vorgesehen, der im Falle einer herkömmlichen Ladenwaage von deren Waagenkörper eingenommen wäre.

Bei der in den Figuren 1 a und 1b gezeigten Waage sind dagegen sämtliche funktionalen Elemente der Waage an dem oberhalb des unteren Abschnitts 11 anschließenden oberen Abschnitts 15 der Tragsäule 1 angeordnet, und mithin in einem höhenmäßigen Abstand von im dargestellten Beispiel von ca. 80 cm bis 1 m von dem Aufstellungsort 8. Darüber hinaus ist durch die Ausgestaltung der Waage als Hängewaage mit Lastarm 2 eine größere Auflagefläche für das Wägegut 7 nicht mehr erforderlich, so daß die Gesamtausdehnung der Waage orthogonal zur Schwererichtung G weiter verringert ist. Die Waage erfordert noch weniger Platzbedarf, und das benachbart dem Aufstellungsort 8 dargebotene Warensortiment ist für den Kunden gut einsehbar.

Wie in Fig. 1c gezeigt ist, kann die Waage ohne weiteres auch auf einer gegenüber der Horizontalen geneigten Auflagefläche 8' festgelegt werden, auf der oftmals Obst und Gemüse in Verkaufsläden dargeboten werden. Somit steht der als Hängewaage ausgelegten Waage ein variableres Flächenangebot der Ladenstruktur zur Verfügung, so daß auf herkömmliche separate horizontale Stellflächen oder Tragetische vollständig verzichtet werden kann.

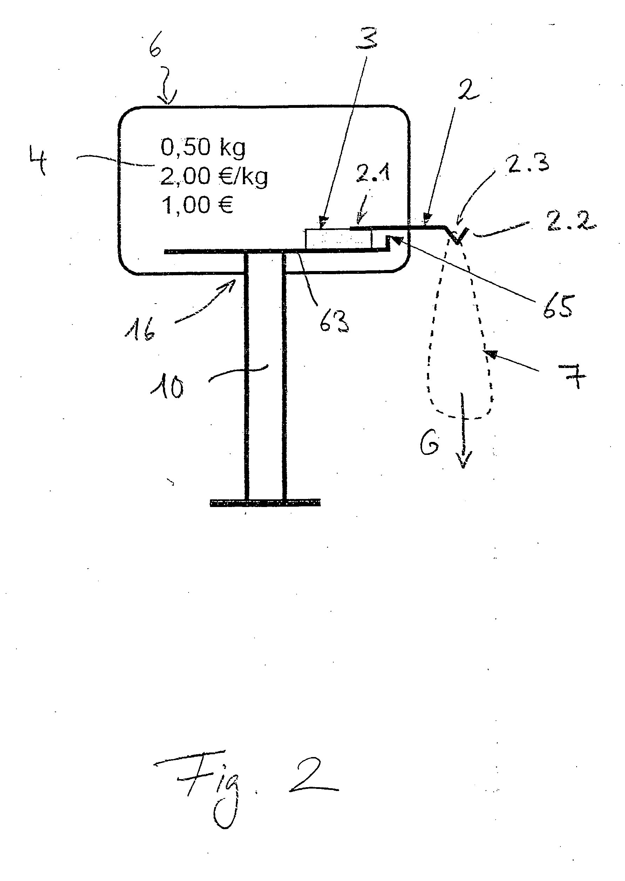

In Fig. 2 ist eine weitere Ausführungsform einer Waage schematisch dargestellt, die eine Tragesäule 10 aufweist, an deren oberem Ende 16 ein Waagenkörper 6 anschließt, in dem alle Waagenfunktionselemente untergebracht und/oder angebracht sind. Auf einer sich horizontal erstreckenden und von der Tragesäule 10 gestützten Trageplatte 63 sitzt der elektromagnetische Kraftwandler 3 der Waage auf. An der Oberseite des Kraftwandlers 3 ist in Fig. 2 rechts das waagenzugewandte Ende 2.1 eines Lastarms 2 der Waage kräftemäßig gekoppelt und befestigt, wobei dessen entgegengesetztes freies Ende 2.2 nach außen über die Begrenzung des Waagenkörpers 6 hinausragt. Nahe dem freien Ende 2.2 des Lastarms 2 ist schematisch ein vorgesehener Aufhängebereich 2.3 dargestellt, in den ein Behälter wie eine Tragetüte eingehängt werden kann, ohne daß ein axiales Verrutschen des das Wägegut 7 enthaltenden Behälters beim Wägevorgang zu befürchten ist.

Hängt ein Benutzer eine mit dem Wägegut 7 gefüllte Tüte wie in Fig. 2 angedeutet an den Aufhängebereich 2.3 des Lastaufnehmers 2, wird die Gewichtskraft des Wägeguts 7 in den Kraftwandler 3 eingeleitet und in ein elektrisches Signal umgewandelt. Entsprechend ausgelegte Kraftwandler sind bekannt und werden an dieser Stelle nicht weiter erläutert.

Nicht in Fig. 2 dargestellt ist eine im Wagenkörper 6 angeordnete Auswerteeinheit, die das vom Kraftwandler 3 erhaltene elektrische Signal auswertet und daraus sowie aus einer über die als Touch-screen ausgeführte Sichtanzeige 4 eingegebenen Produktidentifikationsinformation über einen gespeicherten spezifischen Preis (Preis/Gewichtseinheit) das Produktgewicht, den spezifischen Preis sowie den sich daraus ergebenden Kaufpreis für das Wägegut 7 auf der Sichtanzeige 4 anzeigt, wie schematisch in Fig. 2 dargestellt ist.

Am lastarmseitigen Ende der Trageplatte 63 ist unterhalb des Lastaufnehmers 2 ein Ansatz 65 angeordnet, der eine Bewegung des Lastarms 2 nach unten sperrt, sobald die dem Ansatz 65 gegenüberliegende Stelle des Lastarms 2 an dem Ansatz 65 anschlägt. Die Last, bei deren Beaufschlagung des Lastarms 2 dieser am Ansatz 65 anschlägt, stellt eine kritische Grenzlast dar, oberhalb der der Kraftwandler 3 kein der tatsächlichen Last entsprechendes Wägeergebnis mehr ermitteln kann. Somit bildet der Anschlag 65 einen Überlastschutz gegen eine übermäßige Belastung des Kraftwandlers 3 und/oder der Kopplung des Lastaufnehmers 2 an den Kraftwandler 3. Die Höhe des Anschlags 65 wird daher passend zur Belastbarkeit des Kraftwandlers 3 gewählt, um die maximal in den Kraftwandler 3 einleitbare Kraft zu begrenzen.

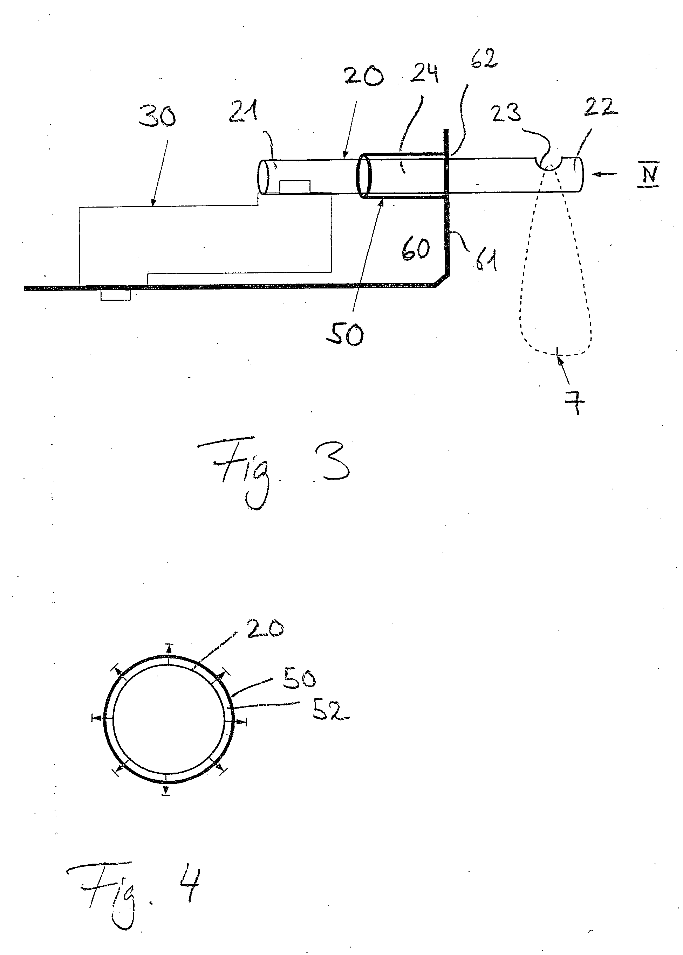

In Fig. 3 ist eine weitere Ausführungsform einer Waage und ihrer Anordnung von Kraftwandler, Lastaufnehmer und Überlastschutz im Bereich eines Waagenkörpers 60 gezeigt. Der Kraftwandler 30 ist an seinem lastaufnehmerfernen Endbereich fest mit einer Trageplatte verbunden, während der daran in Richtung der Lastaufnahme anschließende Bereich des Kraftwandlers 30 frei über der Trageplatte schwebt. Bei der Ausführungsform in Fig. 3 ist der als zylindrisches Rohr ausgebildeter Lastarm 20 an seinem Kopplungsende 21 mit dem Kraftwandler 30 kraftmäßig gekoppelt und befestigt, während das entgegengesetzte Ende 22 des Lastarms 20 an der bodenfernen Oberseite eine Einkerbung 23 aufweist, in die eine das Wägegut 7 aufnehmende Tragetasche einhängbar ist. An eine Wand 61 des Waagenkörpers 60 ist in einem Bereich um eine von dem Lastarm 20 durchdrungene Öffnung 62 nach innen hin ein rohrartiger Hohlzylinder 50 angeflanscht, der sich in horizontaler Richtung erstreckt und vom Lastaufnehmer 20 auf Höhe von dessen mittlerem Bereich 24 durchdrungen wird.

Wie besser aus Fig. 4 erkennbar, die eine Draufsicht auf den Lastaufnehmer 20 und die Wand des Überlastschutzrohrs 50 gesehen aus der Richtung IV in Fig. 3 zeigt, ist zwischen der Außenfläche des rohrartigen Lastarms 20 und der Innenfläche des rohrartigen Überlastschutzes 50 ein ringspaltförmiger Zwischenraum 52 gebildet, so daß eine Bewegung des Lastaufnehmers 20 senkrecht zu seiner Rohrachse im Bereich der Öffnung 62 durch den den Lastarm 20 umschließenden, als Außenrohr gebildeten Überlastschutzes auf eine durch die radiale Abmessung des Zwischenraums 52 vorgegebene maximale Bewegungsstrecke begrenzt ist. Jede über eine eine Bewegung über diese Bewegungsstrecke bewirkende Wägegutlast oder Störlast hinausgehende Kraft wird nicht mehr in den Kraftwandler 30, sondern vielmehr in das Überlastschutzrohr 50 eingeleitet, wodurch der Kraftwandler 30 und dessen Ankopplung an den Lastarm 20 zuverlässig vor Überlastung geschützt ist.

Die Erfindung ist nicht auf die in der Figurenbeschreibung gezeigten Ausführungsbeispiele eingeschränkt. Vielmehr können einzelne Merkmale der Beschreibung sowie der anhängigen Ansprüche für die Erfindung in ihren verschiedenen Ausführungsformen wesentlich sein.

### Bezugszeichenliste

- 1: Tragsäule
- 2: Lastarm
- 2.1, 2.2: Lastarmenden
- 2.3: Lastarmbereich
- 3: Kraftwandler
- 4: Sichtanzeige
- 6: Waagenkörper
- 7: Wägegut
- 8, 8': Aufstellungsort/Auflagefläche
- 9: Kiste
- 11: unterer Säulenabschnitt
- 12: unteres Säulenende
- 13: Verankerung
- 15: oberer Säulenabschnitt
- 16: oberes Säulenende
- 17: Querstrebe
- 20: Lastarm
- 21, 22: Lastarmenden
- 23: Einkerbung
- 24: mittlerer Bereich
- 30: Kraftwandler
- 50: Überlastschutzrohr
- 52: Ringspalt
- 60: Waagenkörper
- 61: Wand
- 62: Öffnung
- 63: Trageplatte
- 65: (Überlast)Anschlag
- IV: Richtung
- G: Gewichtskraft/Schwererichtung

## Patentansprüche

1. Waage bestehend aus einem, in der Richtung der Gewichtskraft (G) eines mit der Waage zu wiegenden Gutes (7) gesehen, ersten Abschnitt (11), mit dem die Waage an einem Aufstellungsort (8) festlegbar ist, und einem sich an den ersten Abschnitt (11) anschließenden zweiten Abschnitt (15), wobei diese Abschnitte (11, 15) einen elektromechanischen Kraftwandler (3; 30) zur Erzeugung eines der Gewichtskraft (G) entsprechenden elektrischen Signals und einen mit dem Kraftwandler (3; 30) kräftemäßig gekoppelten Lastaufnehmer (2; 20) zur Einleitung der Gewichtskraft (G) in den Kraftwandler (3; 30) aufweisen, **dadurch gekennzeichnet, daß**
orthogonal zur Richtung der Gewichtskraft (G) die räumliche Ausdehnung des ersten Abschnittes (11) gegenüber der des zweiten Abschnittes (15) herabgesetzt ist.

2. Waage nach Anspruch 1, **dadurch gekennzeichnet, daß** der Lastaufnehmer (2; 20) zur hängenden Aufnahme des zu wiegenden Gutes ausgebildet ist.

3. Waage nach Anspruch 1 oder 2, **dadurch gekennzeichnet, daß** der Lastaufnehmer (2; 20) und der Kraftwandler (3; 30) in dem zweiten Abschnitt (15) angeordnet sind.

4. Waage nach einem der Ansprüche 1 bis 3, **dadurch gekennzeichnet, daß** der erste Abschnitt (11) aus einer Teillänge einer schlanken Tragsäule (1) besteht, an deren freiem Ende (12) die Waage an ihrem Aufstellungsort (8) festlegbar ist, und der zweite Abschnitt (15) die verbleibende Teillänge der Tragsäule (1) mit dem daran festgelegten Kraftwandler (3; 30) sowie dem damit gekoppelten Lastaufnehmer (2; 20) umfaßt.

5. Waage nach einem der Ansprüche 1 bis 4, **dadurch gekennzeichnet, daß** der zweite Abschnitt (15) eine Auswerteeinheit für die der Gewichtskraft (G) entsprechenden Signale aufweist.

6. Waage nach einem der Ansprüche 1 bis 5, **dadurch gekennzeichnet, daß** der zweite Abschnitt (15) eine Sichtanzeigeeinheit (4) für aus den der Gewichtskraft (G) entsprechenden Signalen gebildete Gewichtswerte aufweist.

7. Waage nach einem der Ansprüche 1 bis 6, **dadurch gekennzeichnet, daß** der zweite Abschnitt (15) eine Eingabeeinheit für manuelle Benutzereingaben aufweist.

8. Waage nach Anspruch 6 und 7, **dadurch gekennzeichnet, daß** die Sichtanzeigeeinheit (4) ein Berührungsbildschirm ist.

9. Waage nach Anspruch 5 und 7, **dadurch gekennzeichnet, daß** durch die Auswerteeinheit in Abhängigkeit von dem der Gewichtskraft (G) des gewogenen Gutes (7) entsprechenden Signal und einer manuell eingegebenen Benutzereingabe gemäß einer vorgegebenen Zuordnung eine Produktinformation, insbesondere ein Kaufpreis, für das gewogene Gut (7) bestimmbar und insbesondere an der Sichtanzeigeeinheit (4) anzeigbar ist.

10. Waage nach einem der Ansprüche 2 bis 9, **dadurch gekennzeichnet, daß** der Lastaufnehmer (2; 20) einen stabförmigen Lastarm aufweist oder daraus gebildet ist, und insbesondere als Hohlkörper (20) ausgebildet ist.

11. Waage nach Anspruch 10, **dadurch gekennzeichnet, daß** die Richtung der Längserstreckung des Lastarms (2; 20) in dessen unbelastetem Zustand im wesentlichen orthogonal zu der Richtung der Gewichtskraft (G) verläuft.

12. Waage nach einem der Ansprüche 1 bis 11, **dadurch gekennzeichnet, daß** der zweite Abschnitt (15) einen Überlastschutz (65; 50) aufweist, durch den eine von der Lastaufnahme verursachte Bewegung des Lastaufnehmers (2; 20) bei Überschreiten einer vorgegebenen Grenzlast sperrbar ist.

13. Waage nach Anspruch 12, **dadurch gekennzeichnet, daß** der Überlastschutz (50) den Kraftwandler (30) auch vor der Einleitung einer Störkraft in der Ebene orthogonal zur Längserstreckung des Lastaüfnehmers (20) schützt, indem er eine übermäßige Bewegung des Lastaufnehmers aus dem unbelasteten Zustand in dieser Ebene sperrt.

14. Waage nach Anspruch 12 oder 13, **dadurch gekennzeichnet, daß** der Überlastschutz als ortsfest angebrachter Hohlkörper (50) von einem Teil des Lastaufnehmers (20) durchdrungen ist.

15. Waage nach einem der Ansprüche 12 bis 14, **dadurch gekennzeichnet, daß** bei Eingreifen des Überlastschutzes (65; 50) ein Warnsignal erzeugbar und insbesondere auf der Sichtanzeige (4) anzeigbar ist.

16. Waage nach einem der Ansprüche 7 bis 15, **dadurch gekennzeichnet, daß** eine auf der Sichtanzeige anzeigbare Anzeigeinformation, eine Produktinformation wie etwa Preis pro Gewichtseinheit und/oder die vorgegebene Zuordnung über die Eingabeeinheit änderbar ist/sind.
